(19) Europäisches Patentamt
European Patent Office
Office européen des brevets

(11) Veröffentlichungsnummer: **0 205 124**
**B1**

(12) # EUROPÄISCHE PATENTSCHRIFT

(45) Veröffentlichungstag der Patentschrift: **31.01.90**

(51) Int. Cl.⁴: **C 08 G 65/40**

(21) Anmeldenummer: **86107728.7**

(22) Anmeldetag: **06.06.86**

(54) **Verfahren zur Herstellung phosphorhaltiger Polyarylenäther.**

(30) Priorität: **13.06.85 DE 3521124**

(43) Veröffentlichungstag der Anmeldung: **17.12.86 Patentblatt 86/51**

(45) Bekanntmachung des Hinweises auf die Patenterteilung: **31.01.90 Patentblatt 90/5**

(84) Benannte Vertragsstaaten: **DE FR GB IT NL**

(56) Entgegenhaltungen:
**EP-A- 0 085 377**
**EP-A- 0 143 407**
**US-A- 4 175 175**

**CHEMICAL ABSTRACTS, Band 88, Nr. 18, 1. Mai 1978, Seite 2, Nr. 121744w, Columbus, Ohio, US; HASHIMOTO, SHIZUNOBU et al.: "Synthesis and properties of phosphorus-containing aromatic polyethers" & J. MACROMOL. SCI., CHEM. 1977, A11(12), 2167-76**

**Die Akte enthält technische Angaben, die nach dem Eingang der Anmeldung eingereicht wurden und die nicht in dieser Patentschrift enthalten sind.**

(73) Patentinhaber: **Röhm GmbH, Kirschenallee Postfach 4242, D-6100 Darmstadt 1 (DE)**

(72) Erfinder: **Ude, Werner, Dr., Birngartenweg 115, D-6100 Darmstadt-Arheilgen (DE)**
Erfinder: **Knebel, Joachim, Dr., Dieselstrasse 20, D-6100 Darmstadt (DE)**
Erfinder: **Schröder, Günter, Dr., Leipziger Strasse 7, D-6105 Ober-Ramstadt (DE)**

**EP 0 205 124 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von phosphorhaltigen Polyarylenäthern, die schwer brennbare organische Kunststoffe mit sehr hoher Zersetzungstemperatur darstellen.

Aus der DE-A 3 203 186 sind phosphorhaltige Polyarylenäther bekannt, die sich gegenüber den von S. Hashimoto et al., Journal of Makromol. Sci. Chem., A 11 (12), Seiten 2167-2176 (1977) beschriebenen phosphorhaltigen aromatischen Polyäthern dadurch unterscheiden, daß sie eine höhere reduzierte Vikosität, d.h. ein höheres Molekulargewicht haben und Massen von erheblicher Festigkeit und typischen Kunststoffeigenschaften mit guten Selbstlöscheigenschaften darstellen. Ihre reduzierte Viskosität $\eta_{sp}/c$ liegt bei wenigstens 0,25 dl/g.

Die Herstellung dieser phosphorhaltigen Polyarylenäther erfolgt durch Polykondensation von bifunktionellen aromatischen Verbindungen, die Fluoratome und Hydroxylgruppen als reaktive Gruppen tragen und von denen mindestens eine Verbindung eine Phosphin- bzw. Phosphinoxidteilstruktur aufweist. Dafür werden Reaktionszeiten von 2 bis 10 Stunden benötigt. Ein großer Nachteil für die Herstellung solche Kunststoffeigenschaften aufweisender Substanzen ist, daß zu deren Bildung die technisch schwer zugänglichen und damit teuren Fluorverbindungen als Polykondensationspartner benötigt werden.

Die Verwendung von chlorhaltigen und damit besser verfügbaren und billigeren Ausgangsverbindungen zur Herstellung phosphorhaltiger Polyäther durch Polykondensation, von z.B. Bis(p-chlorphenyl)phenylphosphinoxid mit aromatischen Bisphenolen in Gegenwart von Alkali bei hohen Temperaturen in einem hochsiedenden polaren Lösungsmittel innerhalb von 10 Stunden ist aus der Arbeit von S. Hashimoto et al. bekannt. Die Polyäther hatten eine verhältnismäßig niedrige reduzierte Viskosität $\eta_{sp}/c \leqslant 0,15$ dl/g. Sie bestanden zum Teil aus braunen, viskosen Ölen, waren zum Teil gummiartige Massen oder krümelige Pulver. Aus den festen Reaktionsprodukten konnten keine Massen mit Kunststoffeigenschaften erhalten werden.

Es bestand daher die Aufgabe, phosphorhaltige Polyarylenäther, die sich in ihren Eigenschaften, d.h. besonders in einem höheren $\eta_{sp}/c$ und mit Kunststoffeigenschaften, von den von Hashimoto et al. beschriebenen phosphorhaltigen Polyarylenäthern unterscheiden, und die ausgehend von dichlorierten aromatischen Phosphorverbindungen hergestellt werden, bereit zu stellen.

Erfindungsgemäß wird die Aufgabe dadurch gelöst, daß durch Polykondensation von dichlorierten Diphenyl- bzw. Triphenylphosphinoxiden der Formel I mit Bisphenolen der Formel II in Reaktionszeiten, die im Bereich von mindestens 12 bis im allgemeinen 100, bevorzugt 16 bis 80 Stunden liegen, phosphorhaltige Polyarylenäther mit $\eta_{sp}/c \geqslant 0,25$ dl/g erhalten werden, die sich als solche zu Massen mit Kunststoffeigenschaften verarbeiten lassen.

Die Erfindung betrifft ein Verfahren zur Herstellung von phosphorhaltigen Polyarylenäthern der Struktur

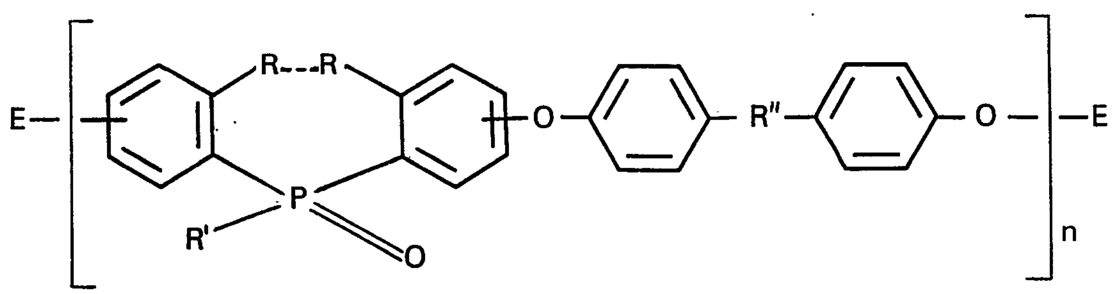

mit einer reduzierten Viskosität $\eta_{sp}/c > 0,25$ dl/g durch Polykondensation eines Bis-(chlorphenyl)phosphinoxids I mit einem Bisphenol II bei Temperaturen von 100-300 Grad C, in Gegenwart eines Lösungsmittels für den Polyarylenäther und in Gegenwart einer zur Halogenmenge äquivalenten Alkalimenge

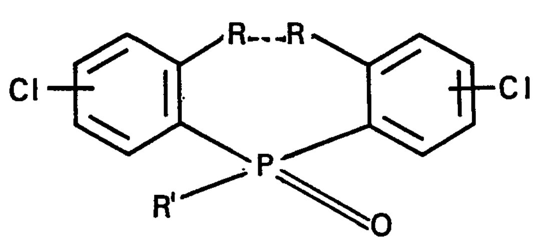 I

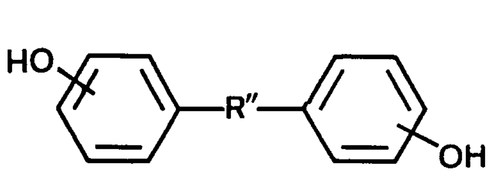 II

wobei

R jeweils ein Wasserstoffatom oder R...R zusammengenommen eine kovalente Einfachbindung oder ein Sauerstoffstom, ein Schwefelatom, eine Sulfonyl-, Carbony-, Methylen- oder Isopropylidengruppe,

R' eine Alkyl- oder Arylgruppe,

R'' eine Einfachbindung oder ein Sauerstoffatom oder ein Schwefelatom oder ein 5 bis 15 C-Atome enthaltender organischer Rest, dessen freie Valenzen von quartären C-Atomen ausgehen oder die oben genannte Formel II Phenolphthalein darstellt,

E eine Engdruppe, bestehend aus Chlor oder Wasserstoff bzw. Hydroxy- oder einer Alkyl- bzw. Alkoxy-, oder Aryl- bzw. Aryloxy- oder Acyl- bzw. Acyloxygruppe und

n ein Mittelwert von mindestens 10 ist,

dadurch gekennzeichnet, daß die Polykondensation in Reaktionszeiten von mindestens 12 Stunden durchgeführt wird.

Die Erfindung betrifft vor allem phosphorhaltige Polyarylenäther bestehend aus wiederkehrenden Einheiten der Struktur

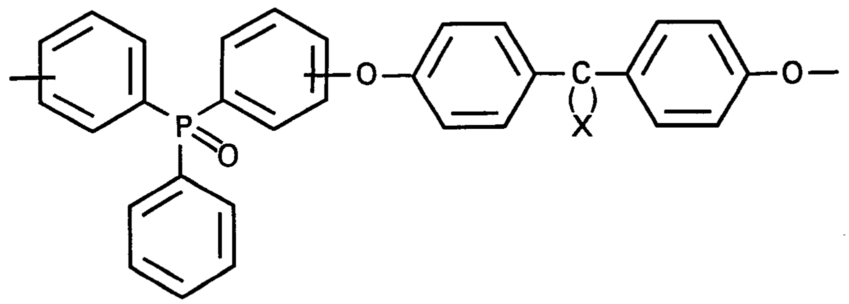

worin X eine der Gruppen

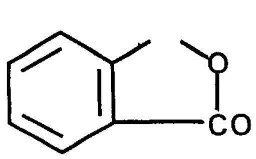

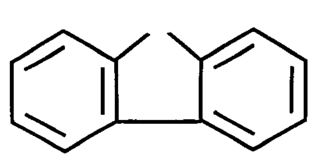

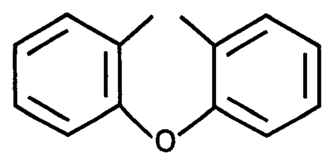

ist, mit einer reduzierten Viskosität $\eta_{sp}/c > 0{,}25$ dl/g, phosphorhaltige Polyarylenäther, bestehend aus wiederkehrenden Einheiten der Struktur

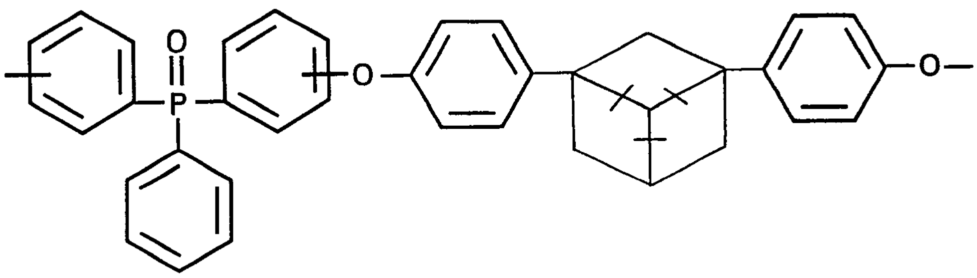

und phosphorhaltige Polyarylenäther bestehend aus wiederkehrenden Einheiten der Struktur

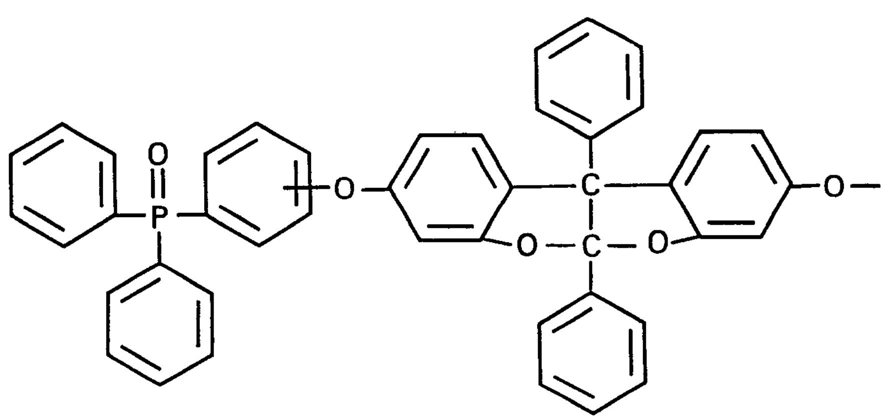

Die Polyarylenäther werden erfindungsgemäß in Polykondensationszeiten von $\geqslant$ 12 Stunden durch Polykondensation von dichlorierten phosphorhaltigen Monomeren der Struktur I

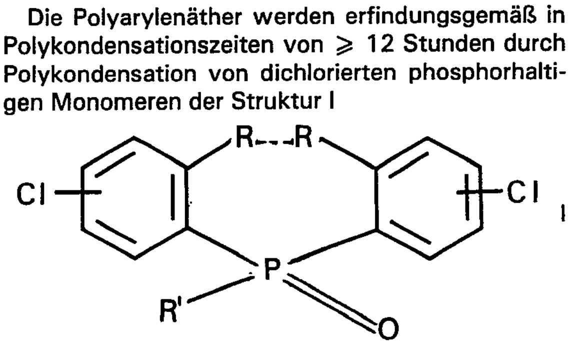
I

worin R = H oder R...R eine Einfachbindung oder O, S, $SO_2$, CO, $CH_2$, $C(CH_3)_2$ und
R' eine Aryl-, insbesondere Phenyl- oder Alkyl-, insbesondere Methylgruppe ist
mit Bisphenolen der Struktur II erhalten

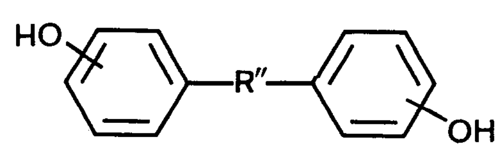
II

worin R'' die oben angegebenen Bedeutungen hat. Beispiele für R'' sind in der Struktur

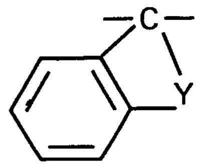

enthalten,

worin Y = $-CO-O$, $o-C_6H_4$, $-O-(o\text{-}C_6H_4)$ sein kann.

Dazu zählen Diphenole wie beispielsweise 4,4'-Dihydroxydiphenyl, 4,4'-Dihydroxydiphenyläther, 9,9-Bis-(4-hydroxyphenyl)fluoren, 9,9-Bis-Bis-(4--hydroxyphenyl)xanthen, 3,8-Dihydroxy-5a,10b--diphenyl-cumarano-2',3',2,3-cumaran, 4,4-Dihydroxyphenyladamantan und Phenolphthalein.

Die nach dem erfindungdsgemäßen Verfahren hergestellten Polykondensate mit einem $\eta_{sp}/c \geq 25$ dl/g haben danach die Struktur III

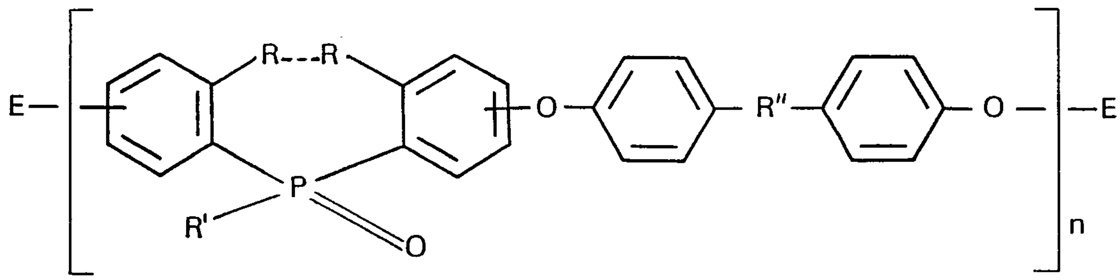

III

Die Bedeutung von R, R' und R'' ist oben erläutert, n ist eine dem Polykondensationsgrad des erhaltenen Polyarylenäthers entsprechende Zahl bzw. ein Mittelwert von mindestens 10. Die Endgruppen E können nicht umgesetzte Chloratome oder Wasserstoffatome der phenolischen Hydroxylgruppen sein. Hydroxylendgruppen werden zur Stabilisierung der Polymeren vorteilhaft veräthert, z.B. mit Methylchlorid oder anderen Alkylierungs- bzw. Arylierungsmitteln, oder mit Acylierungsmitteln zu entsprechenden Estern umgesetzt.

Es wurde gefunden, daß zur Herstellung phosphorhaltiger Polyarylenäther mit dem erforderlichen Mindestwert der reduzierten Viskosität und der Struktur III, durch Polykondensation eines dichlorierten Phosphinoxids der Struktur I mit einem Bisphenol der Struktur II bei Reaktionstemperaturen im Bereich von 100 bis 300°C in Gegenwart eines polaren Lösungsmittels, Polykondensationszeiten von mindestens 12 Stunden benötigt werden.

Die Polykondensationsbedingungen sind insbesondere hinsichtlich der Verwendung geeigneter Lösungsmittel, wie z.B. Chlorbenzol oder N-Methylpyrrolidon, den Angaben der DE-A 3 203 186 bzw. der US-A 4 492 805 oder derer von Hashimoto et al. analog. Das gleiche gilt auch für die starkbasischen Kondensationsmittel. Als solche werden insbesondere die Alkaliverbindungen Natrium- oder Kaliumcarbonat, in einer zur abzuspaltenden Chlormenge äquivalenten Menge eingesetzt.

Um den notwendigen Polykondensationsgrad n zu erreichen, ist es erforderlich, daß die beiden Ausgangsverbindungen I und II möglichst genau mit ihren funktionellen Gruppen im stöchiometrischen Verhältnis 1:1 vorliegen.

Das Alkali kann in begrenztem Überschuß eingesetzt werden.

Unter den phosphorhaltigen Ausgangskomponenten der Struktur I sind die Dichlorderivate des Methyl-diphenylphosphinoxyds und des Triphenylphosphinoxids bevorzugt. Die Chlorgruppen stehen vorzugsweise in para-Stellung zu dem an das Phosphoratom gebundene C-Atom. Bevorzugte Vertreter der Verbindung I sind 4,4'-Dichlortriphenylphosphinoxid und 4,4'-Dichlordiphenylmethylphosphinoxid.

Die aromatischen Bisphenole II tragen ihre phenolischen Hydroxylgruppen an getrennten Phenylenkernen. Diese sind durch R'' wie oben definiert miteinander verbunden.

Beispiele der Bisphenole II sind die im folgenden wiedergegebenen Verbindungen (1) bis (8):

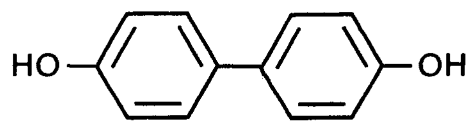

4,4'-Dihydroxydiphenyl (1)

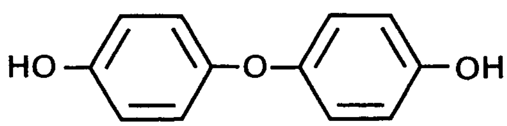

4,4'-Dihydroxydiphenyläther (2)

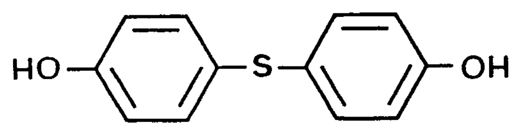

4,4'-Dihydroxydiphenylsulfid (3)

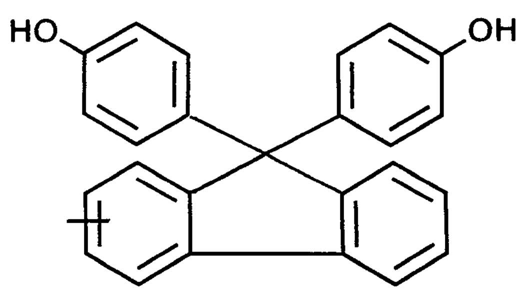

9,9'-Bis-(4-hydroxyphenyl)fluoren (4)

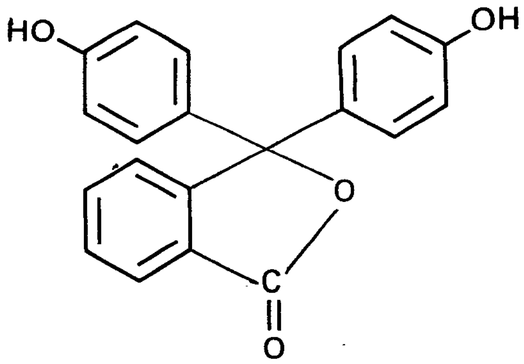

Phenolphthalein (5)

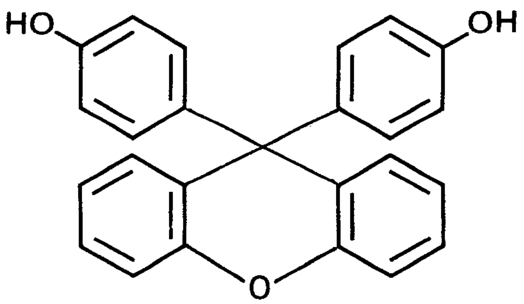

9,9-Bis-(4-hydroxyphenyl)xanthen (6)

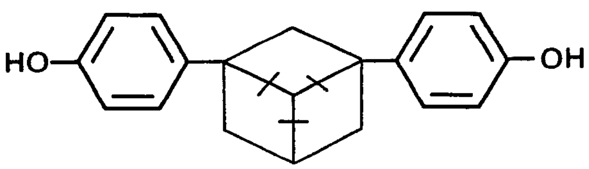

4,4'-Dihydroxyphenyl-adamantan (7)

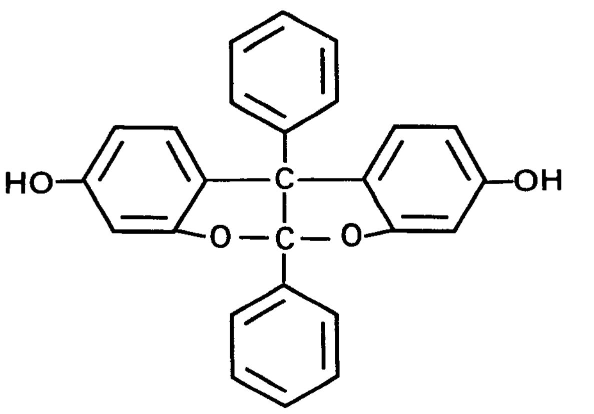

3,8-Dihydroxy-5a, 10b-diphenyl-cumarano--2',3',2,3-cumaran. (8)

Die Erfindung schließt somit auch solche Gruppen R'' ein, die mit den an die freien Valenzen gebundenen Phenylgruppen mehrfach verbrückt sind.

Die Erfindung wird durch die nachfolgenden Beispiele näher erläutert.

*Beispiel 1*

In einem 250 ml Rundkolben mit Rührer, Innenthermometer, Liebig-Kühler mit Vorlage. Tropftrichter und Argonzuleitung wurden 10,10 g (0,05 Mol) 4,4'-Dihydroxydiphenyläther, 17,36 g (0,05 Mol) 4,4'-Dichlortriphenylphosphinoxid (Reinheit > 98%), 7,30 (0,0525 Mol) Kaliumcarbonat, 75 ml N-methylpyrrolidon und 50 g Chlorbenzol zusammengegeben. Man erhitzte unter Inertgas auf Siedetemperatur und destillierte ein Wasser/Chlorbenzol-Gemisch ab. Als praktisch kein Chlorbenzol mehr überging, wurden langsam weitere 50 g Chlorbenzol zur Reaktionsmischung getropft und dieses gleichzeitig zusammen mit Resten des noch vorhandenen Wassers abdestilliert. Unter Erhöhen der Sumpftemperatur auf ca. 180°C wurde das Chlorbenzol soweit wie möglich entfernt.

Die Reaktionsmischung wurde nun bei 180°C 44 Stunden erhitzt und anschließend bei dieser Temperatur 30 Minuten Chlormethan durchgeblasen. Nach dem Abkühlen wurde mit ca. 20 ml N-Methylpyrrolidon verdünnt und vom Ungelösten abfiltriert. Anschließend tropfte man die Mischung in 2 l Wasser/Methanol (v : v = 7 : 3), sammelte das ausgefallene Polykondensat auf einem Filter, wusch mit 50 ml Methanol und trocknete das Produkt 20 Stunden lang bei Raumtemperatur im Luftstrom. Anschließend wurde der Polyäther in möglichst wenig Methylenchlorid gelöst und in Methanol ausgefällt. Das flockige, ausgefallene Produkt wurde abfiltriert und bei 80°C im Vakuum bis zur Gewichtskonstanz getrocknet (Ausbeute: 19,8 g).

Aus Chloroform erhält man eine klare, gelbe flexible Gießfolie (Mw nach GPC in DMF, Polystyrol als Eichsubstanz: 83 900).

In einem Vergleichsversuch wurde die Reaktion bereits nach 10 Stunden abgebrochen. Man gewann aus Chlororform nur eine sehr spröde Gießfolie.

*Beispiele 2 und 3*

Man setzte 0,05 Mol 4,4'-Dichlortriphenylphosphinoxid analog Beispiel 1 mit verschiedenen Bisphenolen um. Die variierten Parameter und die Ergebnisse sind in folgender Tabelle angegeben:

| Beispiel | Bisphenol | Reaktionszeit bei 180°C [h] | Ausbeute [g] | $\eta_{sp}/c$ (Chloroform) [dl/g] | Gießfolie aus Chloroform |
|---|---|---|---|---|---|
| 2 | 4,4'-Dihydroxydiphenyl | 42 | 8 | 0,58 | gelb. klar stabil |
| 3 | Phenolphthalein | 20 | 8,7 | 0,32 | gelb. klar stabil |

*Beispiel 4*

Das Verfahren von Beispiel 1 wird auf die Umsetzung von 0,05 Mol 4,4'-Dichlordiphenylmethylphosphinoxid angewendet. Man erhält 16 g eines Polyethers mit einer spezifischen Viskosität von 0,50 dl/g (in Chloroform).

*Beispiel 5-9*

Das Verfahren von Beispiel 1 wird auf die Umsetzung von 0,05 Mol 4,4'-Dichlortriphenylphosphinoxid angewendet.

Die Ergebnisse sind in der folgenden Tabelle II zusammengefaßt.

| Beispiel | angewendetes Bisphenol | Reaktionszeit bei 189°C [h] | Ausbeute [g] | $\eta_{sp}/c$ [dl/g] |
|---|---|---|---|---|
| 5 | Bisphenol 7 | 40 | 14,0 | 0,4 |
| 6 | Bisphenol 8 | 42 | 14,5 | 0,3 |
| 7 | Bisphenol 4 | 40 | 16,8 | 0,4 |
| 8 | Bisphenol 6 | 43 | 14,1 | 0,3 |
| 9 | Bisphenol 3 | 55 | 12,8 | 0,4 |

**Patentansprüche**

1. Verfahren zur Herstellung von phosphorhaltigen Polyarylenäthern der Struktur

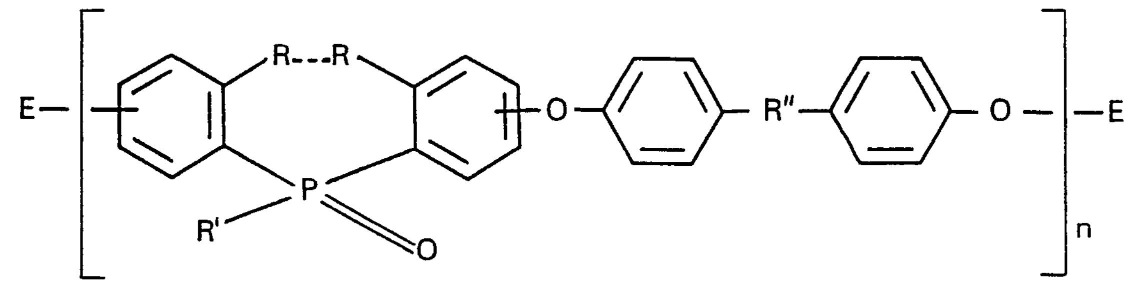

mit einer reduzierten Viskosität $\eta_{sp}/c > 0,25$ dl/g durch Polykondensation eines Bis-(chlorphenyl)-phosphinoxids I mit einem Bisphenol II bei Temperaturen von 100-300 Grad C, in Gegenwart eines Lösungsmittels für den Polyarylenäther und in Gegenwart einer zur Halogenmenge äquivalenten Alkalimenge

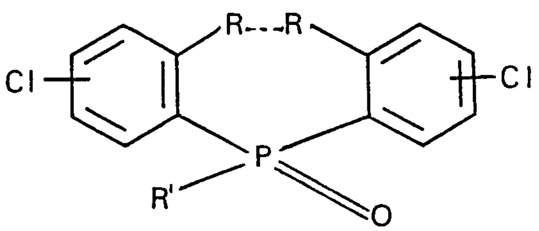

I

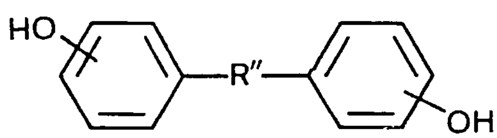

II

wobei

R jeweils ein Wasserstoffatom oder R...R zusammengenommen eine kovalente Einfachbindung oder ein Sauerstoffatom, ein Schwefelatom, eine Sulfonyl-, Carbonyl-, Methylen- oder Isopropylidengruppe,

R' eine Alkyl- oder Arylgruppe,

R'' eine Einfachbindung oder ein Sauerstoffatom oder ein Schwefelatom oder ein 5 bis 15 C-Atome enthaltender organischer Rest, dessen freie Valenzen von quartären C-Atomen ausgehen oder die oben genannte Formel II Phenolphthalein darstellt,

E eine Endgruppe, bestehend aus Chlor oder Wasserstoff bzw. Hydroxy- oder einer Alkyl- bzw. Alkoxy-, oder Aryl- bzw. Aryloxy- oder Acyl- bzw. Acyloxygruppe und

n ein Mittelwert von mindestens 10 ist,

dadurch gekennzeichnet, daß die Polykondensation in Reaktionszeiten von mindestens 12 Stunden durchgeführt wird.

2. Verfahren zur Herstellung von phosphorhaltigen Polyarylenäthern gemäß Anspruch 1, dadurch gekennzeichnet, daß die Polykondensation in Reaktionszeiten von 12 bis 80 Stunden durchgeführt wird.

3. Verfahren zur Herstellung von phosphorhaltigen Polyarylenäthern gemäß den Ansprüchen 1 und 2, dadurch gekennzeichnet, daß die Polykondensation mit I, in der R' eine Methyl- oder Phenylgruppe ist, durchgeführt wird.

4. Verfahren zur Herstellung von phosphorhaltigen Polyarylenäthern gemäß den Ansprüchen 1 bis 3, dadurch gekennzeichnet, daß die Polykondensation mit I, in der R jeweils ein Wasserstoffatom ist, durchgeführt wird.

5. Verfahren zur Herstellung von phosphorhaltigen Polyarylenäthern gemäß den Ansprüchen 1 bis 3, dadurch gekennzeichnet, daß die Polykondensation mit I, in der R...R eine kovalente Einfachbindung oder ein Sauerstoffatom symbolisieren, durchgeführt wird.

6. Verfahren zur Herstellung von phosphorhaltigen Polyarylenäthern gemäß den Ansprüchen 1 bis 5, dadurch gekennzeichnet, daß die Polykondensation mit II, in der R'' ein Sauerstoffatom ist, durchgeführt wird.

7. Verfahren zur Herstellung von phosphorhaltigen Polyarylenäthern gemäß den Anprüchen 1 bis 5, dadurch gekennzeichnet, daß die Polykondensation mit II, in der R'' eine Einfachbindung darstellt, durchgeführt wird.

8. Verfahren zur Herstellung von phosphorhaltigen Polyarylenäthern gemäß den Ansprüchen 1 bis 5,

dadurch gekennzeichnet, daß die Polykondensation mit 9,9-Bis(4-hydroxyphenyl)fluoren als II durchgeführt wird.

9. Verfahren zur Herstellung von phosphorhaltigen Polyarylenäthern gemäß den Ansprüchen 1 bis 5, dadurch gekennzeichnet, daß die Polykondensation mit Phenolphthalein als II durchgeführt wird.

10. Verfahren zur Herstellung von phosphorhaltigen Polyarylenäthern gemäß den Ansprüchen 1 bis 5, dadurch gekennzeichnet, daß die Polykondensation mit 9,9-Bis-(4-hydroxyphenyl)xanthen durchgeführt wird.

11. Phosphorhaltiger Polyarylenäther, bestehend aus wiederkehrenden Einheiten der Struktur

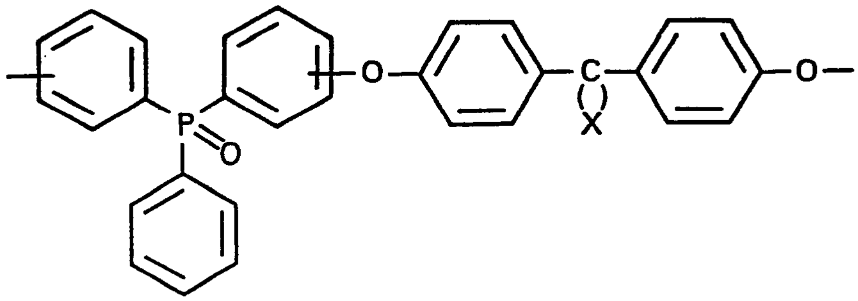

worin X eine der Gruppen

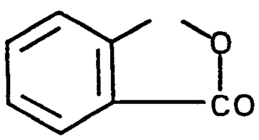

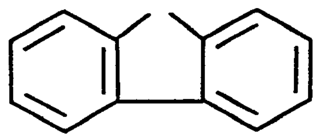

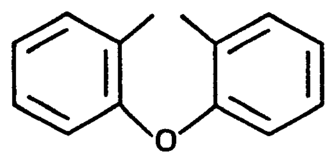

ist, mit einer reduzierten Viskosität $\eta_{sp}/c \geq 0,25$ dl/g.

12. Phosphorhaltiger Polyarylenäther gemäß Anspruch 11, 13 und 14 gekennzeichnet durch Endgruppen F, Cl, OH, $OCH_3$.

13. Phosphorhaltiger Polyarylenäther, bestehend aus wiederkehrenden Einheiten der Struktur

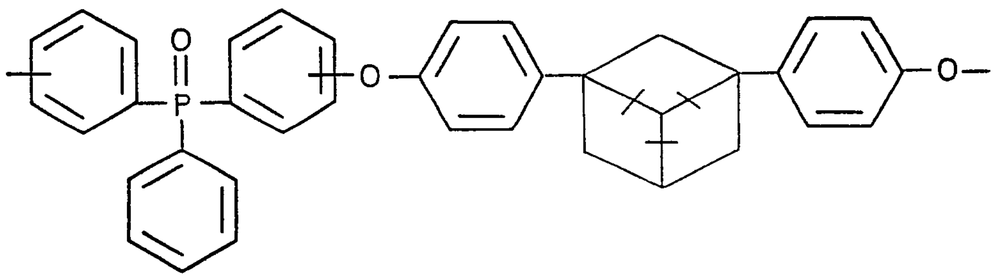

14. Phosphorhaltiger Polyarylenäther, bestehend aus wiederkehrenden Einheiten der Struktur

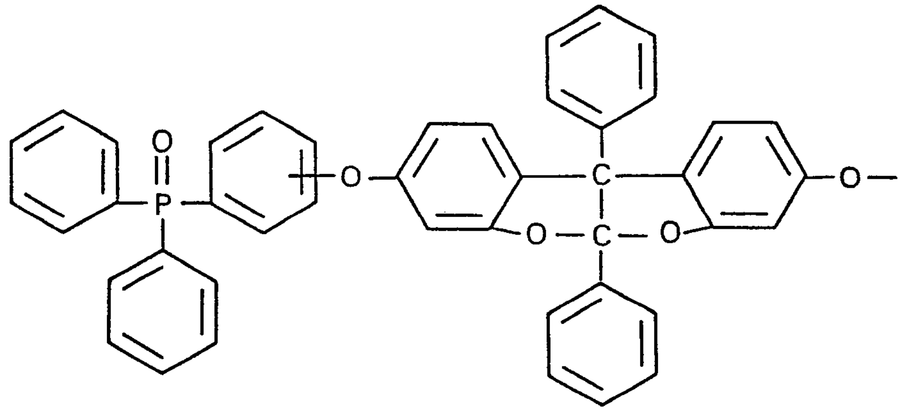

**Claims**

1. Process for the preparation of phosphorus-containing polyarylene ethers of the structure

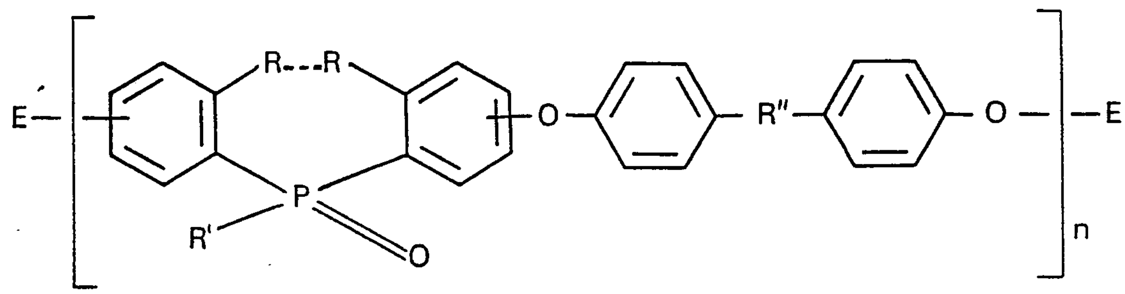

having a reduced viscosity $\eta_{sp}/c > 0.25$ dl/g by polycondensation of a bis(chlorophenyl)phosphine oxide I with a bisphenol II at temperatures of 100 - 300 degreas C in the presence of a solvent for the polyarylene ether and in the presence of an amount of alkali equivalent to the amount of halogen

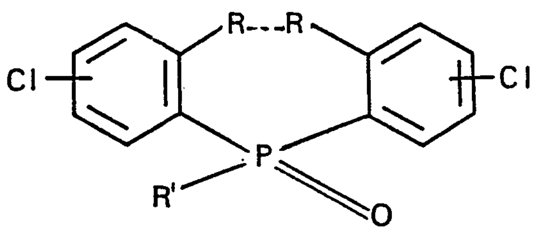

I

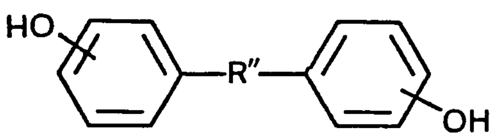

II

wherein

R is in each case a hydrogen atom, or R...R together are a covalent single bond or an oxygen atom, a sulphur atom or a sulphonyl, carbonyl, methylene or isopropylidene group,

R' is an alkyl or alkyl group,

R'' is a single bond or an oxygen atom or a sulphur atom or an organic radical containing 5 to 15 C atoms, the free valencies of which start from quaternary C atoms, or the abovementioned formula II represents phenolphthalein,

E is an end group consisting of chlorine or hydrogen, or a hydroxyl or an alkyl or alkoxy, or aryl or aryloxy, or acyl or acyloxy group and

n is an average value of at least 10,

characterized in that the polycondensation is carried out in reaction times of at least 12 hours.

2. Process for the preparation of phosphorus-containing polyarylene ethers according to claim 1, characterized in that the polycondensation is carried out in reaction times of 12 to 80 hours.

3. Process for the preparation of phosphorus-containing polyarylene ethers according to claims 1 and 2, characterized in that the polycondensation is carried out with I, in which R' is a methyl or phenyl group.

4. Process for the preparation of phosphorus-containing polyarylene ethers according to claims 1 to 3, characterized in that the polycondensation is carried out with I, in which R is in each case a hydrogen atom.

5. Process for the preparation of phosphorus-containing polyarylene ethers according to claims 1 to 3, characterized in that the polycondensation is carried out with I, in which R...R symbolizes a covalent single bond or an oxygen atom.

6. Process for the preparation of phosphorus-containing polyarylene ethers according to claims 1 to 5, characterized in that the polycondensation is carried out with II, in which R'' is an oxygen atom.

7. Process for the preparation of phosphorus-containing polyarylene ethers according to claims 1 to 5, characterized in that the polycondensation is carried out with II, in which R'' represents a single bond.

8. Process for the preparation of phosphorus -containing polyarylene ethers according to claims 1 to 5, characterized in that the polycondensation is carried out with 9,9-bis(4-hydroxyphenyl)fluorene as II.

9. Process for the preparation of phosphorus-containing polyarylene ethers according to claims 1 to 5, characterized in that the polycondensation is carried out with phenolphthalein as II.

10. Process for the preparation of phosphorus-containing polyarylene ethers according to claims 1 to 5, characterized in that the polycondensation is carried out with 9,9-bis-4(hydroxyphenyl)xanthene.

11. Phosphorus-containing polyarylene ethers consisting of recurring units of the structure

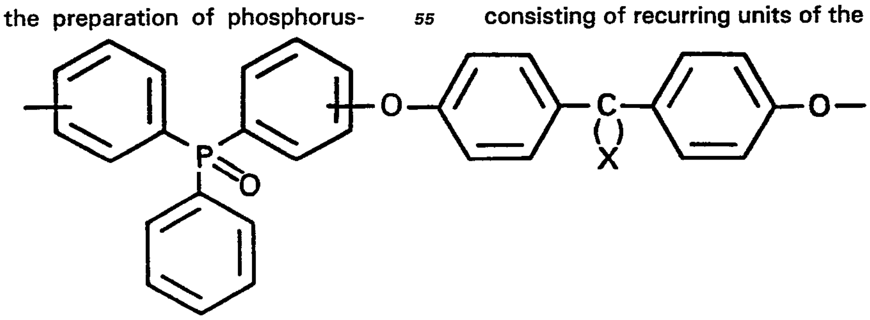

wherein X is one of the groups

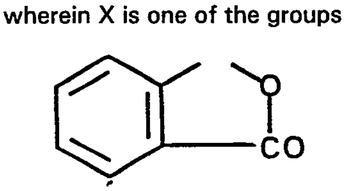

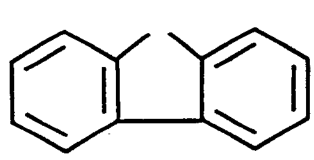

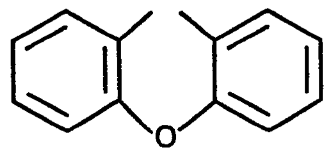

having a reduced viscosity $\eta_{sp}/c \geqslant 0.25$ dl/g.

12. Phosphorus-containing polyarylene ethers according to claim 11, 13 and 14, characterized by end groups F, Cl, OH or $OCH_3$.

13. Phosphorus-containing polyarylene ethers consisting of recurring units of the structure

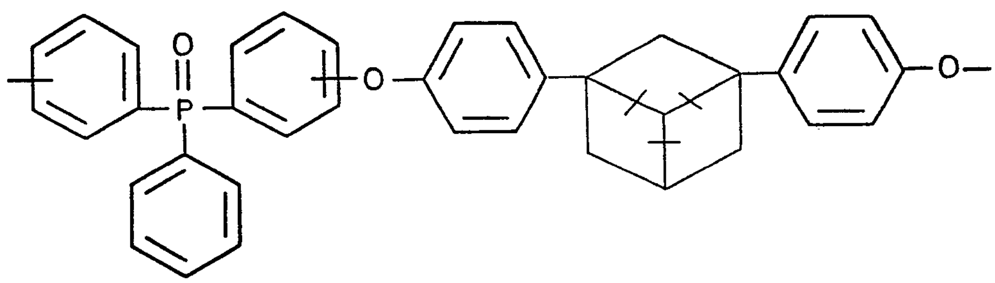

14. Phosphorus-containing polyarylene ethers consisting of recurring units of the structure

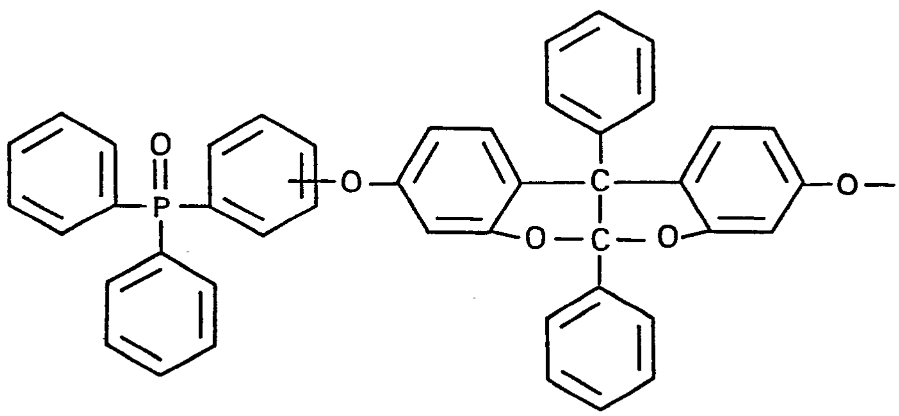

**Revendications**

1. Procédé de préparation de polyarylèneéthers phosphorés de structure

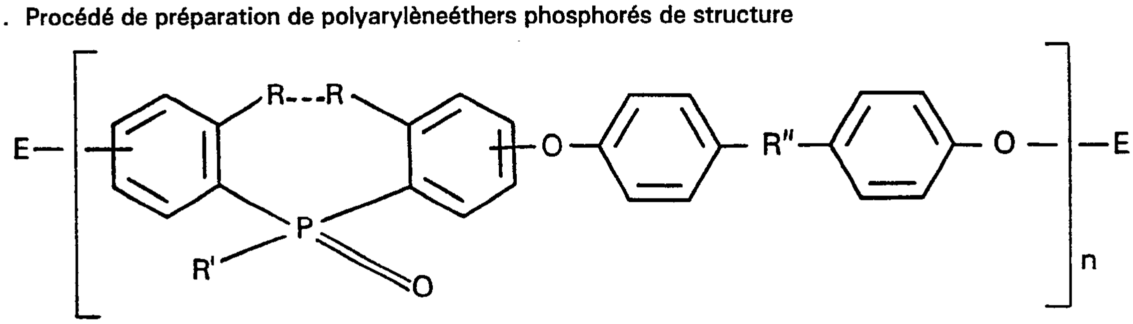

ayant une viscosité réduite $\eta_{sp}/c > 0,25$ dl/g, par polycondensation d'un oxyde de bis-(chlorophenyl)phosphine I avec un bisphénol II à des températures de 100 à 300°C, en présence d'un solvant pour le polyarylèneéther et en présence d'une quantité de substance alcaline équivalente à la quantité d'halogène

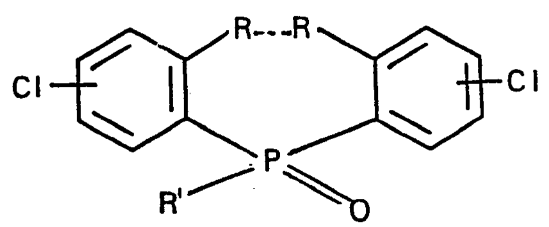

I

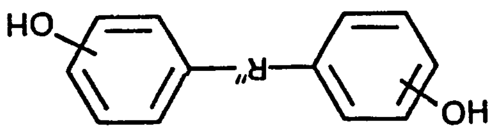 II

R étant chaque fois un atome d'hydrogène ou R...R pris ensemble étant une liaison simple covalente ou un atome d'oxygène, un atome de soufre, un groupement sulfonyle, carbonyle, méthylène ou isopropylidène,

R' étant un groupement alkyle ou aryle,

R'' étant une liaison simple, un atome d'oxygène, un atome de soufre ou un reste organique qui contient de 5 à 15 atomes de carbone et dont les valences libres résultent d'atomes de carbone quaternaires, ou ladite formule II représentant la phénolphtaléine,

E étant un groupement terminal, constitué par un atome de chlore, d'hydrogène ou par un groupement hydroxy, alkyle ou alcoxy, aryle ou aryloxy, acyle ou acyloxy, et

n étant une valeur moyenne d'au moins 10,

caractérisé en ce que la polycondensation est conduite en des temps de réaction d'au moins 12 h.

2. Procédé de préparation de polyarylèneéthers phosphorés selon la revendication 1, caractérisé en ce que la polycondensation est conduite en des temps de réaction de 12 à 80 h.

3. Procédé de préparation de polyarylèneéthers phosphorés selon la revendication 1 ou 2, caractérisé en ce que la polycondensation est conduite avec une substance de formule I dans laquelle R' est un groupement méthyle ou phényle.

4. Procédé de préparation de polyarylèneéthers phosphorés selon l'une quelconque des revendications 1 à 3, caractérisé en ce que la polycondensation est conduite avec une substance de formule I dans laquelle R est chaque fois un atome d'hydrogène.

5. Procédé de préparation de polyarylèneéthers phosphorés selon l'une quelconque des revendications 1 à 3, caractérisé en ce que la polycondensation est conduite avec une substance de formule I dans laquelle R...R symbolyse une liaison simple covalente ou un atome d'oxygène.

6. Procédé de préparation de polyarylèneéthers phosphorés selon l'une quelconque des revendications 1 à 5, caractérisé en ce que la polycondensation est conduite avec une substance de formule II dans laquelle R'' est un atome d'oxygène.

7. Procédé de préparation de polyarylèneéthers phosphorés selon l'une quelconque des revendications 1 à 5, caractérisé en ce que la polycondensation est conduite avec une substance de formule II dans laquelle R'' représente une liaison simple.

8. Procédé de préparation de polyarylèneéthers phosphorés selon l'une quelconque des revendications 1 à 5, caractérisé en ce que la polycondensation est conduite avec du 9,9-bis-(4-hydroxyphényl)-fluorène en tant que substances de formule II.

9. Procédé de préparation de polyarylèneéthers phosphorés selon l'une quelconque des revendications 1 à 5, caractérisé en ce que la polycondensation est conduite avec de la phénolphtaléine en tant que substance de formule II.

10. Procédé de préparation de polyarylèneéthers phosphorés selon l'une quelconque des revendications 1 à 5, caractérisé en ce que la polycondensation est conduite avec du 9,9-bis-(4-hydroxyphényl)xanthène.

11. Polyarylèneéthers phosphorés, se composant d'unités répétitives de structure

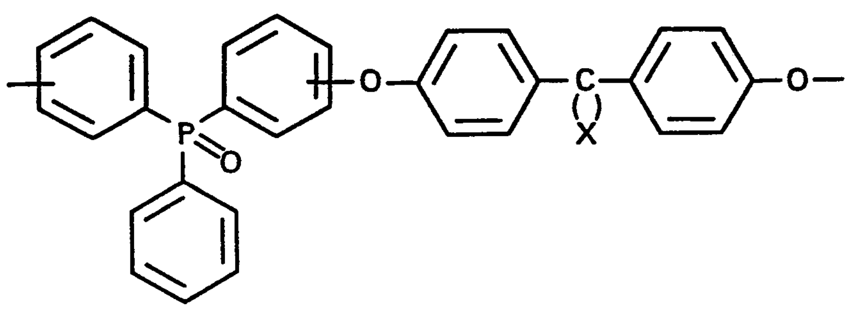

dans laquelle X est l'un des groupements

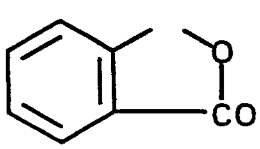

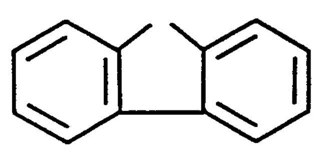

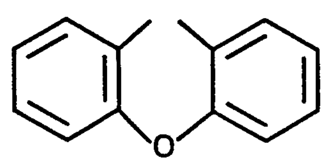

ayant une viscosité réduite $\eta_{sp}/c \geqslant 0,25$ dl/g.

12. Polyarylèneéthers phosphorés selon l'une quelconque des revendications 11, 13 ou 14, caractérisés par des groupements terminaux F, Cl, OH, $OCH_3$.

13. Polyarylèneéthers phosphorés, se composant d'unités répétitives de structure

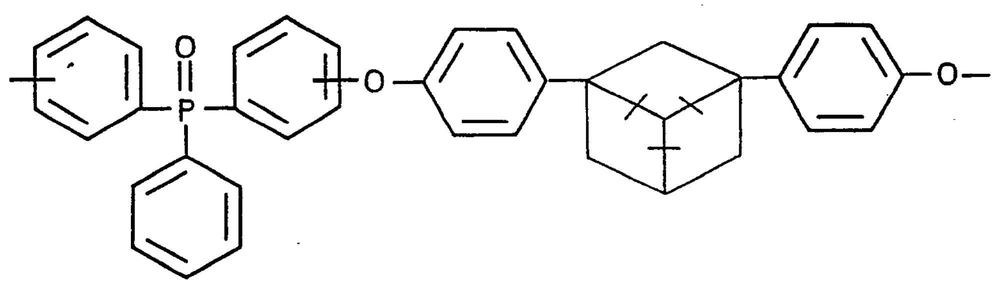

14. Polyarylèneéthers phosphorés, se composant d'unités répétitives de structure